# EUROPÄISCHE PATENTANMELDUNG

(11) **EP 0 555 662 A1**
(43) Veröffentlichungstag der Anmeldung: **18.08.1993**
(21) Anmeldenummer: 93100764.5
(22) Anmeldetag: 20.01.1993
(51) Int. Cl.: B65G 47/14

(54) **Einrichtung zum Speichern und lagerichtigen Zuführen von Kleinteilen**

(30) Priorität: 05.02.1992 DE 4203145
(71) Anmelder: ROBERT BOSCH GMBH, 70442 Stuttgart (DE)
(72) Erfinder: Voss, Jürgen, W-7000 Stuttgart 31 (DE); Velten, Herbert, W-7000 Stuttgart 40 (DE)

(57) **Zusammenfassung**

Es wird eine Einrichtung zum Speichern und lagerichtigen Zuführen von Kleinteilen vorgeschlagen, mit einem Speicherbehälter (10), einem Umlaufspeicher (20), einem linearen Orientierungsförderer (30), dessen Teileförderstrecke (31) mit Mitteln zum lagerichtigen Orientieren der Kleinteile versehen ist, und mit einer parallel zum Orientierungsförderer (30) angeordneten Rückführstrecke (40) zum Aufnehmen der nicht orientierten Kleinteile. Der Orientierungsförderer (30) ist in Förderrichtung hinter dem Umlaufspeicher (20) angeordnet. Die Förderrichtung der Rückführstrecke (40) verläuft entgegen der Förderrichtung des Orientierungsförderers (30). Der Orientierungsförderer (30) und die Rückführstrecke (40) sind zwei voneinander getrennte Baueinheiten, die jeweils von einem eigenen Schwingantrieb angetrieben sind.

## Beschreibung

### Stand der Technik

Die Erfindung bezieht sich auf eine Einrichtung zum Speichern und lagerichtigen Zuführen von Kleinteilen nach der Gattung des Hauptanspruchs. Eine derartige Einrichtung ist aus der EP-B1 256 028 bekannt, bei der parallel neben einem Schrägförderer ein Orientierungsförderer angeordnet ist und ebenfalls parallel neben dem Orientierungsförderer liegend eine Rückführstrecke für vom Orientierungsförderer abfallende Teile vorgesehen ist. Bei dieser bekannten Ausführungsform liegen - von oben gesehen - Speicherbehälter, Schrägförderer, Orientierungsförderer und Rückführstrecke parallel nebeneinander und werden von einem einzigen Schwingantrieb 22 angetrieben.

Nachdem die im Speicherbehälter als Haufwerk vorliegenden Kleinteile einen Eingangsbereich des Schrägförderers erreicht haben, werden sie mittels des Schwingantriebs zunächst über die gesamte Breite des Schrägförderers nach oben bewegt. Der Schrägförderer besitzt eine zu einer Seitenwand hin geneigte Schräglage, so daß sich mit zunehmender Förderstrecke die Kleinteile entlang der Wand aufreihen und somit eine Vororientierung einnehmen. Zusätzlich ist vorgesehen, dem Schrägförderer eine parallel dazu verlaufende weitere Ausweichstrecke zuzuordnen, auf der die beim Vororientieren seitlich abgedrängten Kleinteile zurück in den Eingangsbereich des Schrägförderers gelangen. Schrägförderer und Ausweichstrecke bilden einen Umlaufspeicher, der zur zielgerichteten Teilevorsortierung und Teilezwischenpufferung dient.

Am Ende des Schrägförderers ist eine seitliche Öffnung angebracht, durch die die Kleinteile auf den Orientierungsförderer gelangen. Der Öffnung zugeordnet ist im Orientierungsförderer ein weiterer Eingangsbereich, in den sich die vom Schrägförderer in den Orientierungsförderer umgelenkten Kleinteile sammeln können. Insgesamt erfahren die Kleinteile vom Schrägförderer zum Orientierungsförderer hin eine 180° Umlenkung. Durch diese Umlenkung wird die bereits vom Schrägförderer erzeugte Vororientierung der Kleinteile zerstört und es kommt im Eingangsbereich des Orientierungsförderers wiederum zu einer Anhäufung von Kleinteilen, die erst vom Orientierungsförderer aufgelöst wird. Parallel zum Orientierungsförderer ist die schräg nach unten bis auf das Niveau des Eingangsbereichs des Schrägförderers verlaufende Rückführstrecke angeordnet, auf die die vom Orientierungsförderer abgedrängten Kleinteile fallen und wieder in den Eingangsbereich des Schrägförderers gelangen. Der Nachteil dieser Anordnung besteht, wie bereits angedeutet, darin, daß die vom Schrägförderer erfolgte Vororientierung der Kleinteile infolge der 180° Umlenkung wieder aufgelöst wird und ein zusätzlicher Zwischenpuffer gebildet wird, aus dem heraus die Feinorientierung erfolgt.

### Vorteile der Erfindung

Die erfindungsgemäße Einrichtung mit den kennzeichnenden Merkmalen des Hauptanspruchs hat demgegenüber den Vorteil, daß die vom Schrägförderer erzielte Vororientierung vom Orientierungsförderer übernommen wird und somit ein kontinuierlicher Übergang zur Feinorientierung im Orientierungsförderer gewährleistet ist. Dadurch läßt sich der Durchsatz der zu fördernden und zu orientierenden Teile erhöhen. Ferner gestattet die Ausrüstung von Speicherbehälter, Umlaufspeicher, Orientierungsförderer und Rückführstrecke mit jeweils eigenen Antrieben einen gesteuerten Teilefluß sowie maximalen Teiledurchsatz.

Durch die in den Unteransprüchen aufgeführten Maßnahmen sind vorteilhafte Weiterbildungen der im Hauptanspruch gekennzeichneten Anordnung möglich. Zur Unterstützung der Vororientierung im Umlaufspeicher ist es zweckmäßig, daß neben der Schrägförderstrecke eine Ausweichstrecke angeordnet ist, auf der seitlich abgedrängte Kleinteile zurück zum Eingangsbereich des Umlaufspeichers gelangen können. Zusätzlich unterstützt wird diese Wirkung dadurch, daß der Steigungswinkel des Schrägförderers mindestens so groß gewählt wird, daß aufeinanderliegende Kleinteile bei vorhandener Ausweichmöglichkeit und zumindest bei laufendem Antrieb voneinander abrutschen.

### Zeichnung

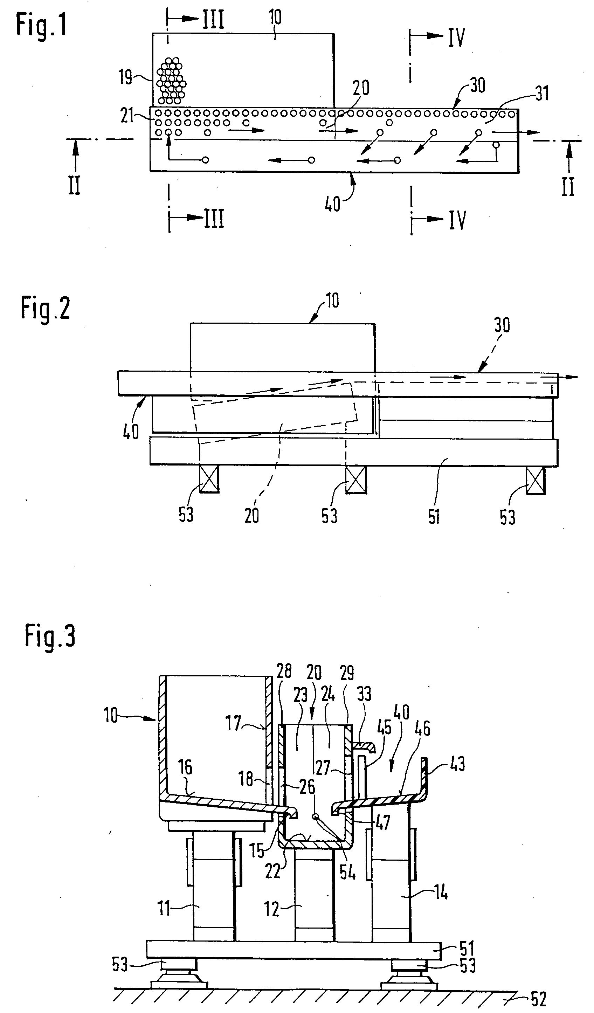

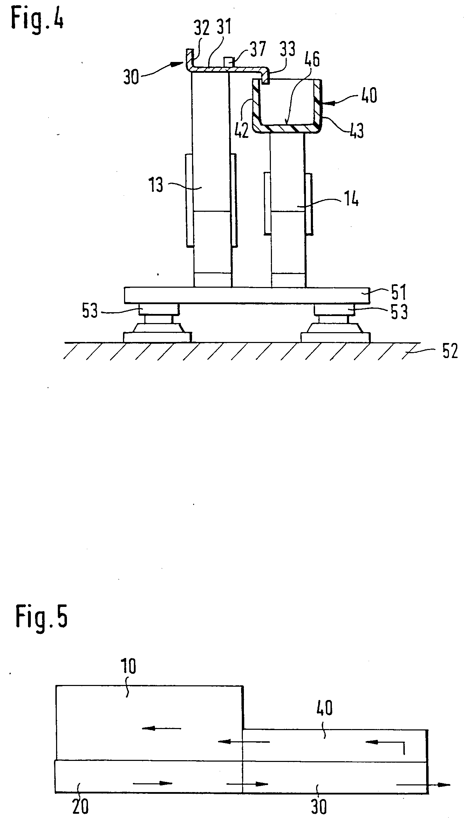

Zwei Ausführungsbeispiele der Erfindung sind in der Zeichnung dargestellt und in der nachfolgenden Beschreibung näher erläutert. Es zeigen Figur 1 eine schematische Darstellung einer Draufsicht auf die erfindungsgemäße Einrichtung, Figur 2 eine schematische Darstellung einer Seitenansicht gemäß Figur 1, Figur 3 einen Schnitt durch die Einrichtung nach der Linie III-III in Figur 1, Figur 4 einen Schnitt durch die Einrichtung nach der Linie IV-IV in Figur 1 und Figur 5 eine schematische Darstellung einer Draufsicht eines zweiten Ausführungsbeispiels.

### Beschreibung der Ausführungsbeispiele

Die Einrichtung hat einen Speicherbehälter 10 mit einem ersten Schwingantrieb 11, einen Umlaufspeicher 20 mit einem zweiten Schwingantrieb 12, einen Orientierungsförderer 30 mit einem dritten Schwingantrieb 13 und eine Rückführstrecke 40 mit einem vierten Schwingantrieb 14. Die Schwingantriebe 11 bis 14 sitzen beispielsweise auf einer Grundplatte 51, die über Befestigungs- und Dämpfungselemente 53 auf einem Fundament 52 verankert sind.

Der Speicherbehälter 10 hat einen Boden 16, der zu seiner umlaufspeicherseitigen Seitenwand 17 und seiner Querwand 19 hin geneigt verläuft. In der umlaufspeicherseitigen Seitenwand 17 ist eine Öffnung 18 eingebracht. Der Boden 16 des Speicherbehälters 10 besitzt einen umlaufspeicherseitigen Ansatz 15.

Der Umlaufspeicher 20 ist - von oben gesehen - parallel neben dem Speicherbehälter 10 angeordnet und besitzt eine speicherbehälterseitige Seitenwand 28 und eine rückführstreckenseitige Seitenwand 29. In der speicherbehälterseitigen Seitenwand 28 ist eine speicherbehälterseitige Öffnung 26 eingebracht, die der Öffnung 18 des Speicherbehälters 10 gegenüberliegt, so daß der umlaufspeicherseitige Ansatz 15 durch die beiden Öffnungen 18, 26 hindurch in einen Eingangsbereich 21 des Umlaufspeichers 20 führt. Ferner ist in die rückführstreckenseitigen Seitenwand 29 eine rückführstreckenseitige Öffnung 27 eingebracht. Ferner ist in die rückführstreckenseitige Seitenwand 29 eine rückführstreckenseitige Öffnung 27 eingebracht. Der Umlaufspeicher 20 besitzt einen Boden 22, der vom Eingangsbereich 21 in Förderrichtung ansteigend verläuft.

In Förderrichtung hinter dem Umlaufspeicher 20 ist der Orientierungsförderer 30 angeordnet. Der Orientierungsförderer 30 ist mit einer Teileförderstrecke 31 ausgeführt, die an einer Seite in eine Seitenwand 32 übergeht.

Von oben gesehen verläuft parallel neben dem Orientierungsförderer 30 und dem Umlaufspeicher 20 die Rückführstrecke 40. Die Rückführstrecke 40 besitzt eine orientierungsförderseitige Seitenwand 42 und eine dem Orientierungsförderer 30 beziehungsweise dem Umlaufspeicher 20 abgekehrte zweite Seitenwand 43. Die Rückführstrecke 40 hat einen Boden 46, der gegen die orientierungsförderseitige Seitenwand 42 leicht abfällt oder waagrecht verläuft. Die orientierungsförderseitige Seitenwand 42 ist am Ausgang der Rückführstrecke 40 mit einer bis zum Boden 46 reichenden Randausklinkung 45 versehen. Diese liegt nach dem Zusammenbau der Baueinheiten der rückführstreckenseitigen Öffnung 27 des Umlaufspeichers 20 gegenüber.

Die Teileförderstrecke 31 des Orientierungsförderers 30 besitzt beispielsweise über die gesamte Förderlänge einen Überhang 33, welcher über die orientierungsförderseitige Seitenwand 42 der Rückführstrecke reicht. Am Ausgang der Rückführstrecke ist der Boden 46 der Rückführstrecke 40 mit einem zungenartigen Ansatz 47 versehen, welcher durch die rückführstreckenseitige Öffnung 27 des Umlaufspeichers 20 in den Eingangsbereich 21 des Umlaufspeichers 20 hineinragt.

Der Boden 23 des Umlaufspeichers 20 ist zweckmäßigerweise mit einen parallel zur Förderstrecke 23 verlaufenden Ausweichstrecke 24 versehen, die vor dem Eingangsbereich 21 endet. Dabei ist die Anordnung so getroffen, daß von der Stelle 54 an die Breite der Ausweichstrecke 24 stetig bis auf den Wert Null abnimmt.

Ein zweites Ausführungsbeispiel geht aus Figur 5 hervor. Dort ist, wie im ersten Ausführungsbeispiel beschrieben, der Speicherbehälter 10 und der Umlaufspeicher 20 parallel nebeneinander angeordnet sowie der Orientierungsförderer 30 in Förderrichtung hinter dem Umlaufspeicher 20 angeordnet. Im Gegensatz zum ersten Ausführungsbeispiel ist die Rückführstrecke 40 an der gegenüberliegenden Seite des Orientierungsförderers angeordnet, so daß die aus der Teileförderstrecke 31 des Orientierungsförderers 30 seitlich abgedrängten Teile von der Rückführstrecke 40 direkt in den Speicherbehälter 10 zurückgeführt werden. Die Rückführstrecke 30 mündet dabei im höher gelegenen Bereich des Bodens 16 des Speicherbehälters 10.

Eine weitere Ausführungsform ist insofern denkbar, daß die Förderstrecke 23 des Umlaufspeichers 20 durch ein endloses Transportband ersetzt ist.

Die beschriebene Einrichtung arbeitet wie folgt: Der erste Schwingantrieb 11 befördert das im Speicherbehälter 10 enthaltene Haufwerk der Kleinteile, beispielsweise Ringscheiben, gegen die Querwand 19, von wo die Kleinteile durch die Öffnung 18 in den Eingangsbereich 21 des Umlaufspeichers 20 gelangen. Der Zustrom in den Eingangsbereich 21 kann abhängig von dessen Belegung mit Hilfe von nicht dargestellten Sensoren gesteuert werden. Dies geschieht zweckmäßigerweise durch zu- und abschalten des Schwingantriebs 11. Der zweite Schwingantrieb 12 befördert die auf dem Boden 22 des Umlaufförderers 20 aufliegenden Kleinteile zunächst über dessen gesamte Breite in Richtung der Pfeile nach rechts (Figur 1). Im Laufe der ansteigenden Förderbewegung drängen sich die im Eingangsbereich 21 ungeordnet vorliegenden Kleinteile durch die Schrägstellung der Förderstrecke 23 an die speicherbehälterseitige Seitenwand 29 und reihen sich somit wie bei einer Perlenkette aneinander und erfahren insofern eine Vororientierung. Die dabei aus der Förderstrecke 23 seitlich herausgedrängten und auf die Ausweichstrecke 24 gelangenden Kleinteile rutschen auf dieser nach unten in den Eingangsbereich 21 zurück und werden dort erneut in die Förderstrecke 23 eingeschleust. Auf diese Weise entsteht im Umlaufspeicher 20 ab einer bestimmten Belegung beziehungsweise Förderleistung ein die Förderung nicht behindernder Umlauf, der es ohne Einbuße an Funktionssicherheit gestattet, dem Schrägförderer 12 eine Pfufferfunktion für eine Teilmenge der zu fördernden Kleinteile zuzuordnen.

Die vorteilhafte Wirkung der Ausweichstrecke 24 kann noch durch eine unterschiedliche Ausführung der Reibungskoeffizienten der Oberfläche der Förderstrecke 23 und Ausweichstrecke 24 unterstützt werden. Durch die Art der Gestaltung der Schrägförderstrecke 23 und der Ausweichstrecke 24 wird eine zielgerichtete Teilevorsortierung und -orientierung ermöglicht. Des weiteren dient der Umlaufspeicher als Teilezwischenpuffer.

Der Orientierungsförderer 30 übernimmt die vororientierten Kleinteile. Im Orientierungsförderer 30 werden die nicht orientierten Kleinteile an den Schikanen 37 seitlich über den Überhang 33 in die Rückführstrecke 40 abgedrängt, auf der sie durch den vierten Schwingantrieb 14 in entgegengesetzter Richtung zur Förderrichtung des Umlaufspeichers 20 und des Orientierungsförderers 30 bewegt werden. Die Kleinteile gelangen infolge der leichten Neigung des Bodens 46 der Rückführstrecke 40 über den zungenartigen Ansatz 47 durch die Randausklinkung 45 und die Seitenwandöffnung 27 wieder in den Eingangsbereich 21 des Umlaufspeichers 20 zurück. Die gleiche Wirkung tritt ein, sobald sich auf der Teileförderstrecke 31 ein Stau bildet.

Beim zweiten Ausführungsbeispiel werden die aus der Teileförderstrecke 31 durch die Schikanen 37 beziehungsweise durch einen auftretenden Stau seitlich auf die Rückführstrecke 40 abgedrängten Teile direkt in den Speicherbehälter 10 zurückgeführt.

Der Teiledurchsatz der Einrichtung wird insbesondere durch die getrennten Schwingantriebe der Baueinheiten begünstigt. Es ist aber auch durchaus denkbar, zu gleichen Ergebnissen zu kommen, wenn der Umlaufspeicher 20 und der Orientierungsförderer 30 einen gemeinsamen Schwingantrieb besitzen, da beide Baueinheiten die Kleinteile in gleicher Förderrichtung bewegen.

## Patentansprüche

1. Einrichtung zum Speichern und lagerichtigen Zuführen von Kleinteilen, mit einem Speicherbehälter für ein ungeordnetes Haufwerk der Kleinteile, mit Mitteln zum Überführen von Kleinteilen aus dem Speicherbehälter in einen vorzugsweise linearen Umlaufspeicher, ferner mit einem vorzugsweise ebenfalls linearen Orientierungsförderer, dessen Teileförderstrecke mit Mitteln zum lagerichtigen Orientieren der Kleinteile versehen ist, und mit einer vorzugsweise parallel zum Orientierungsförderer angeordneten Rückführstrecke zum Aufnehmen der nicht orientierten Kleinteile, dadurch gekennzeichnet, daß der Orientierungsförderer (30) in Förderrichtung hinter dem Umlaufspeicher (20) angeordnet ist und mit seiner Teileförderstrecke (31) an die Förderstrecke des Umlaufspeichers (20) anschließt, und daß die Förderrichtung der Rückführstrecke (40) entgegen der Förderrichtung des Orientierungsförderers (30) verläuft.

2. Einrichtung nach Anspruch 1, dadurch gekennzeichnet, daß der Orientierungsförderer (30) und die Rückführstrecke (40) zwei voneinander getrennte Baueinheiten sind die jeweils von einem eigenen Schwingantrieb angetrieben werden, und daß die Teileförderstrecke (31) des Orientierungsförderers (30) einen seitlichen, randübergreifenden Überhang (33) zur Rückführstrecke (40) hin aufweist, über den die nicht orientierten Kleinteile auf die Rückführstrecke (40) gelangen.

3. Einrichtung nach Anspruch 1 oder 2, dadurch gekennzeichnet, daß die Rückführstrecke (40) tiefer als die Teileförderstrecke (31) des Orientierungsförderers (30), jedoch höher als der Eingangsbereich (21) des Umlaufspeichers (20) liegt.

4. Einrichtung nach einem der Ansprüche 1, 2 oder 3, dadurch gekennzeichnet, daß die Teileförderstrecke (31) des Orientierungsförderers (30) in horizontaler Ebene geführt ist.

5. Einrichtung nach Anspruch 1, dadurch gekennzeichnet, daß der Umlaufspeichers (20) mit einem in Förderrichtung (22) ansteigenden Boden (22) ausgeführt ist, der ferner zu einer seiner in Förderrichtung verlaufenden Seitenwände (28, 29) geneigt verläuft, und daß zu der sich der Boden (22) neigenden Seitenwand (28) oder (29) am Orientierungsförderer eine in Förderrichtung verlaufende Seitenwand (32) angeordnet ist.

6. Einrichtung nach Anspruch 1, dadurch gekennzeichnet, daß der Speicherbehälter (10), der Umlaufspeicher (20) und die Rückführstrecke (40) getrennte Baueinheiten sind.

7. Einrichtung nach Anspruch 6, dadurch gekennzeichnet, daß der Speicherbehälter (10), der Umlaufspeicher (20) und die Rückführstrecke (40) jeweils einen eigenen Antrieb (11, 12) besitzen.

8. Einrichtung nach Anspruch 6, dadurch gekennzeichnet, daß der Umlaufspeicher (20) an der Stelle des Eingangsbereichs (21) eine rückführstreckenseitig Öffnung (27) besitzt, und daß die Rückführstrecke (40) einen die rückfürstreckenseiteige Öffnung (27) übergreifenden Ansatz (47) aufweist, so daß die die Kleinteile von der Rückführstrecke (40) in den Eingangsbereich (21) des Umlaufspeichers (20) gelangen können.

9. Einrichtung nach Anspruch 6, dadurch gekennzeichnet, daß der Umlaufspeicher (20) an der Stelle des Eingangsbereichs (21) eine speicherbehälterseitig Öffnung (26) besitzt, die das Mittel (15) übergreift, so daß die Kleinteile aus dem Speicherbehälter (10) in den Eingangsbereich (21) des Umlaufspeichers (20) gelangen können.

10. Einrichtung nach Anspruch 1, dadurch gekennzeichnet, und daß der Speicherbehälter (10) einen Boden (16) aufweist, der zu einer umlaufspeicherseitigen Seitenwand (17) und einer daran angrenzenden Querwand (19) geneigt verläuft.

11. Einrichtung nach Anspruch 1, dadurch gekennzeichnet, daß der Umlaufspeicher (20) eine Schrägförderstrecke (23) und eine in der gleichen Schrägebene liegende Ausweichstrecke (24) aufweist, die ein Überwechseln seitlich aus der Schrägförderstrecke (23) abgedrängter Kleinteile auf der gesamten Länge der Ausweichstrecke (24) zuläßt und deren Oberfläche und Antrieb auf die Beschaffenheit der Kleinteile abgestimmt sind, so daß diese auf der Ausweichstrecke (24) zum Eingangsbereich (21) zurückgelangen können.

12. Einrichtung nach einem der vorhergehenden Ansprüche, dadurch gekennzeichnet, daß die Zuführung von Kleinteilen aus dem Speicherbehälter (10) auf den Eingangsbereich (21) des Umlaufspeichers (20) nach Maßgabe von dessen Belegung, insbesondere in dessen Eingangsbereich (21) gesteuert erfolgt.

13. Einrichtung nach einem der vorhergehenden Ansprüche, dadurch gekennzeichnet, daß der tiefste Bereich des Speicherbehälters (10) über dem Eingangsbereich (21) des Umlaufspeichers (20) liegt.

14. Einrichtung nach einem der vorhergehenden Ansprüche, dadurch gekennzeichnet, daß Umlaufspeicher (20) und Orientierungsförderer (30) von einem gemeinsamen Antrieb angetrieben sind.
